# EUROPEAN PATENT SPECIFICATION

(11) **EP 0 701 528 B1**
(45) Date of publication and mention of the grant of the patent: **05.12.2001**
(21) Application number: 94920119.8
(22) Date of filing: 08.06.1994
(51) Int. Cl.: B65G 31/04, F04D 5/00

(54) **ROTARY DISK PUMP FOR PARTICULATE MATRIALS WITH GROOVED CONVEYOR DISKS**
DREHSCHEIBENPUMPE FÜR KÖRNIGES MATERIAL MIT GERILLTEN FOERDERSCHEIBEN
POMPE A DISQUES ROTATIFS POUR MATERIAU PARTICULAIRE AVEC DES DISQUES TRANSPORTEUSES MUNIES DE RAINURES

(30) Priority: 11.06.1993 US 76314
(43) Date of publication of application: 20.03.1996
(73) Proprietor: STAMET, INC., Gardena, CA 90248-3130 (US)
(72) Inventor: HAY, Andrew, G., Gardena, CA 90248 (US)
(74) Representative: Allman, Peter John
(86) International application number: PCT/US94/06469
(87) International publication number: WO 94/29202

(56) References cited:
- FR-A- 915 551
- US-A- 4 043 445
- US-A- 4 516 674
- US-A- 4 940 385
- US-A- 4 988 239
- US-A- 5 051 041

## Description

The present invention relates generally to apparatus and methods for transporting and metering particulate material. More particularly, embodiments of the present invention are directed to a particulate material handling device which can be used to both transport and meter solid material of a great range of sizes under both ambient conditions and against pressure.

### Description of Related Art

A wide variety of equipment has been used to either transport or meter particulate material. Such transport equipment includes conveyor belts, rotary valves, lock hoppers, screw-type feeders, etc. Exemplary measurement or metering devices include weigh belts, volumetric hoppers and the like. In order to provide both transport and metering of particulate material, it has generally been necessary to combine or incorporate both types of devices into a system.

One or more of the above identified transport or metering devices may be used in a solids transport system, depending upon a wide variety of parameters. For example, the amount, size and type of particulate material to be transported must be taken into consideration. The distance over which the solids are to be transported and variations in the surrounding pressure during transport must also be taken into account. The various transport and metering systems which are presently in use all have a variety of advantages and disadvantages which limit their performance in transporting or metering a wide variety of particulate types. It would be desirable to provide a single unit which is capable of simultaneously transporting and metering a wide variety of particulate materials under both ambient and pressurized conditions.

Large scale transport and/or metering of coal presents unique problems. A transport apparatus or system which is suitable for transporting one type of coal may not be suitable for transporting a different type of coal. For example, Kentucky coals maintain reasonable integrity when transported through conventional devices such as screw feeders and conveyor belts. However, Western United States coals tend to be more friable and may be degraded to a significant degree during normal transfer operations. It would be desirable to provide an apparatus which is capable of transferring all types of coal with a minimum amount of degradation.

The water content of the particulate solids is another factor which must be considered when designing any transport system. Many transport devices which are suitable for transporting completely dry particles do not function properly when the moisture content of the particulate material is raised. The same is true for particulate metering devices. Conventional metering devices which are designed to measure dry particulates are not well suited to meter moist solids. It would be desirable to provide a transport apparatus which is capable of moving and/or metering particulate solids regardless of their moisture content.

There are also many instances in which it is desirable to transport and meter particulate materials against pressure (e.g., wherein at the pressure of the atmosphere and/or of fluids or solids at the output side of the transport system is greater than the pressure at the input side of the system). It would be desirable to provide an apparatus which is capable of simultaneously pumping and metering under both ambient pressure conditions and against a pressure head caused either by entry into a pressurized system or transport of the particulate material upward against gravity.

It is apparent from the above background that there is a present need for a solids handling or pumping device which operates as a single unit to provide simultaneous transport and metering of particulate material. The unit should be capable of transporting and metering a wide variety of particle types under a wide variety of conditions. Further, the unit should be structurally strong, and mechanically simple and durable so that it can be operated continuously over extended periods of time without failure.

US Patent 5,051,041 describes a rotary disc apparatus for moving particulate material by compacting the material via a choking mechanism. In the described apparatus, particulate material enters a duct formed between two smooth-faced rotating discs. In order for the described device to work, the structure must be such that the particulate material is compacted sufficiently to form a bridge between the two discs, thereby ensuring that a sufficient force is applied by the discs to the compacted material to enable the effective transport of material through the duct. Compaction is achieved by using an adjustable shoe which is positioned to extend into the gap between the discs.

According to the present invention, there is provided an apparatus for transporting particulate material comprising a transport duct having an inlet and an outlet downstream of said inlet, and a primary transport channel located between said inlet and said outlet, said primary transport channel being defined by a pair of opposed moving surfaces which move between said inlet and said outlet towards said outlet, and motive means being provided for moving said movable surfaces between said inlet and said outlet towards said outlet, characterised in that at least one of said moving surfaces has a series of discontinuities, each of said discontinuities is configured to define a transport facilitation zone contiguous with said primary transport channel such that particulate material within said transport facilitation zone is contiguous with particulate material within said primary transport channel, and each of said discontinuities has a downstream facing drive surface.

Apparatus in accordance with the present invention is highly efficient and reliable. The apparatus is capable of transporting a wide range of particulate materials, including both small and large particulates and mixtures of particulates of different sizes and mixtures having various degrees of moisture content. A compacted bridge of particulates is formed between the pair of opposed moving surfaces to produce a compacted transient solid spanning the width of the duct. The apparatus thus acts as a valveless positive displacement pump which is able to provide accurate metering of particulates as well as reliable transport of particulates under ambient conditions and against pressure.

The particulate material may be compacted or compressed prior to or upon entry into the apparatus so as to encourage the formation of a transient bridge composed of substantially interlocked particulates spanning the width of the primary transport channel. Bridging occurs cumulatively towards the inlet of the apparatus. This cumulative bridging may occur without the use of chokes or dynamic relative disc motion although additional chokes or dynamic relative disc motion may be provided. Examples of such chokes and disc motions are described in US patent numbers 5,051,041 and 4,988,239. The bridging of particulates causes the particulates to become semi-hydrostatic in nature such that the force exerted by the downstream facing drive surfaces upon compacted particulates located within the transport facilitation zone drives the entire mass of material through the transport duct towards the outlet.

Preferably, said downstream facing drive surface is substantially perpendicular to said moving surface. Each of the discontinuities may further comprise an upstream facing surface located downstream of said downstream facing drive surface and a bottom area contiguous with said downstream and upstream facing surfaces, said upstream facing surface inclining upwardly from said bottom area to said moving surface.

Preferably the pair of moving surfaces are configured to define a substantially symmetric channel within said transport duct. The pair of moving surfaces may comprises a first face of a first rotary disc and a second face of a second rotary disc and said primary transport channel may be further defined by at least one arcuate wall extending between said inlet and said outlet. The said first face may have an inner section and an outer section and said downstream facing drive surface may extend from said inner section to said outer section. Said downstream facing drive surface may be arcuate and may have a leading end located on said inner section of said first face and a trailing end located on said outer section of said first face, said trailing end extending away from said outlet relative to said leading end. The width of said transport facilitation zone may increase as said transport facilitation zone extends from said inner section to said outer section.

Preferably the apparatus further comprises means for positioning said second face at an angle relative to said first face such that, in rotation, the distance between said first and second faces adjacent said inlet is greater than the distance between said first and second faces downstream from said inlet between said inlet and said outlet. The apparatus may further comprise means for adjusting the said angle.

Preferably the apparatus further comprises means for vibrating said particulates and the vibrating means may be positioned adjacent the inlet.

Preferably the transport duct is composed of substantially non-adhesive material and the apparatus comprises a housing which defines the inlet and outlet and encloses the transport duct.

Features of embodiments of the present invention will become better understood by reference to the following detailed description when considered in conjunction with the accompanying drawings.

### BRIEF DESCRIPTION OF THE DRAWINGS

FIG. 1 is a partial sectional side view of a first preferred exemplary apparatus in accordance with an embodiment of the present invention.
FIG. 2 is a perspective cut away view of the drive rotor of the preferred exemplary apparatus shown in FIG. 1 showing preferred exemplary discontinuities on opposing interior surfaces of parallel rotary discs.
FIG. 3 is a partial sectional transverse view of the drive rotor shown in FIG. 2 taken in the 3-3 plane showing particulates bridged between opposing interior faces of the rotary discs.
FIG. 4 is a plan view of a second preferred exemplary rotary disc.
FIG. 5 is a partial sectional transverse view of the rotary disc shown in FIG. 4 taken in the 5-5 plane.
Fig. 6 is a partial transverse sectional view of an embodiment of a mechanism for supporting one disk at an angle relative to the other.

### DETAILED DESCRIPTION OF THE PREFERRED EMBODIMENTS

In accordance with preferred embodiments of the present invention, the apparatus described provides for transporting and metering particulate materials with increased efficiency and reliability. It may be used for transporting a wide range of particulate materials, including both small and large particulates and mixtures of them, having varying degrees of moisture content, under both ambient and pressurized conditions.

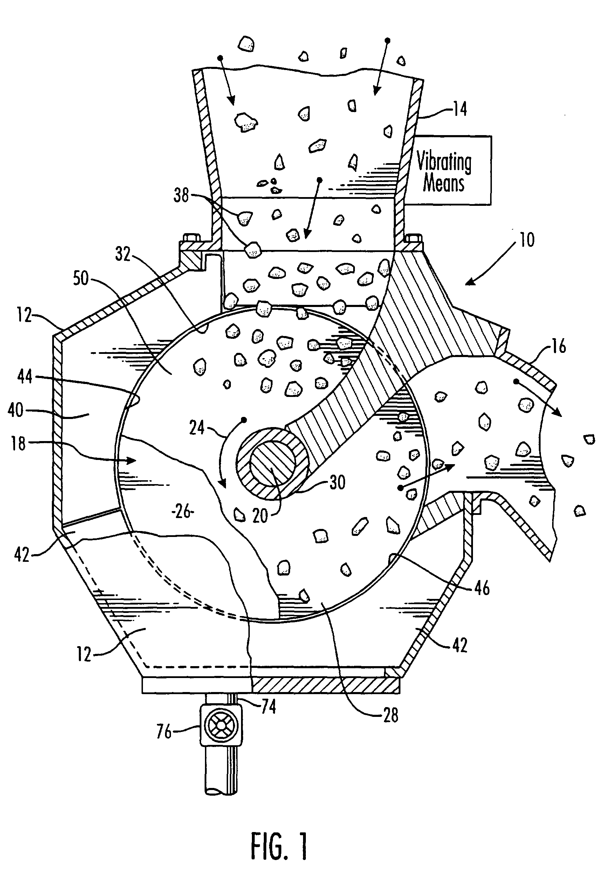

A first preferred exemplary apparatus in accordance with an embodiment of the present invention is shown generally at 10 in FIG. 1. The apparatus 10 includes a housing 12, an inlet 14, and outlet 16. Located within housing 12 is drive rotor 18. The drive rotor 18 is mounted on shaft 20, with shaft 20 being rotatably mounted within a conventional low-friction bearing assembly (not shown) for rotation about the axis of shaft 20. The shaft 20 is connected to a hydrostatic or electrically-driven motor (not shown). The shaft 20 is driven by the motor in the direction shown by arrow 24 in FIG. 1.

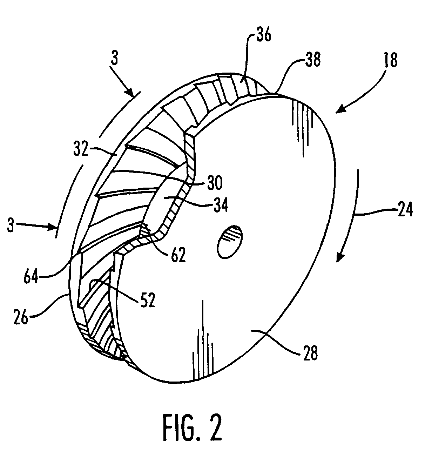

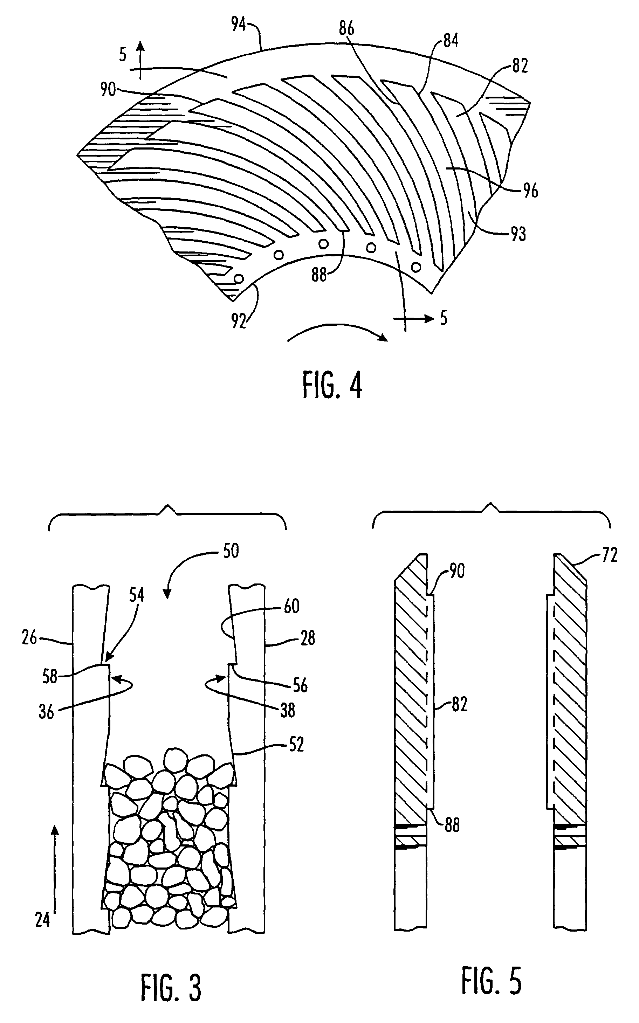

As best shown in FIGS. 2 and 3, the drive rotor 18 includes rotary discs 26 and 28, having inner diameters 30 and outer diameters 32, and hub 34. Preferably, the drive rotor is made up of two separate rotary discs in order to facilitate assembly of the solids pump.

Rotary discs 26 and 28 include opposing interior faces 36 and 38. Opposing interior faces 36 and 38 are not planar but rather include a plurality of evenly spaced radially extending discontinuities 52. Each discontinuity 52 defines a transport facilitation zone 54 having a downstream facing drive surface 56, a bottom area 58 and an upstream facing surface 60.

As best shown in FIGS. 2 and 3, downstream facing drive surfaces 56 are perpendicular to interior faces 36 and 38 and backwardly curving such that trailing end 64 extends away from outlet 16 relative leading end 62 as rotary disc 26 moves between inlet 14 and outlet 16. This backwardly curving configuration facilitates discharge of particulates at outlet 16.

In the preferred embodiment shown in FIGS. 2 and 3, the width of transport facilitation zones 54 increase as transport facilitation zones 54 extend from inner diameter 30 to outer diameter 32. Upstream facing surfaces 60 of each rotary disc incline upwardly from bottom area 58 to the interior face of the rotary disc.

Opposing interior faces 36 and 38 are positioned opposite each other in order to provide surfaces between which the particulate solids are compacted. Preferably, the discontinuities 52 of opposing interior faces 36 and 38 are aligned to define a symmetric channel for transport of particulates as best shown in FIG. 3. This symmetric configuration mitigates against uneven loadings on the bearing assembly (not shown) supporting drive rotor 18 during compaction and transport of particulates.

The preferred exemplary apparatus 10 includes one or more exterior shoes such as those shown in FIG. 1 at 40 and 42. The exterior shoes 40 and 42 are designed to close the primary transport channel formed between interior faces 36 and 38 of the drive rotor 18. Each of the exterior shoes 40 and 42 includes a stationary inner wall 44 and 46, respectively. Inner walls 44 and 46, in combination with hub 34 and opposing interior faces 36 and 38, define the cross-sectional area of the primary transport channel 50 at any given point. Both exterior shoes 40 and 42 are mounted to the housing by way of suitable mounting brackets or pins. The inner wall, or inner walls in the case of plural shoes, are accurately formed so as to conform to the circular perimeter of the rotary discs 26 and 28. Therefore, as the rotary discs 26 and 28 rotate with the shaft 20, the stationary wall of the shoe keeps the particulate matter being transported between the opposing interior faces 36 and 38. In one preferred embodiment, the inner wall of the shoe extends axially (transversely of the shoe) beyond interior surfaces 36 and 38, respectively, of the drive rotor 18 so as to overlap the interior surfaces 36 and 38 of the drive rotor. The shoe is placed as close as possible, within acceptable tolerances, to the outer diameters 32 of interior faces 36 and 38. In this configuration, the shoe is not radially adjustable to move closer or further away from the hub 34 of the drive rotor 18 to change the cross-sectional area of the primary transport channel 50.

In an alternative embodiment, the shoe may be axially sized and shaped so as to fit between opposing interior faces 36 and 38 to form a curved outer wall for the primary transport channel 50. In this configuration, the radial location of the shoe may be adjusted toward or away from the hub 34 of the drive rotor 18 so as to change the cross-sectional area of the primary transport channel 50. For this purpose, a screw adjuster may be connected to one or a plurality of shoes as shown in U.S. Patent No. 4,988,239 (incorporated herein by reference). The screw adjuster shown in the '239 patent provides radially inward and outward adjustment of shoe 40 about a pin. The inward and outward adjustment of shoe 40 allows setting up a choking or compaction of the solids as they move through the pump or, alternatively, to provide a diverging or a constant cross-sectional area along duct. A second screw adjuster may be attached to a second shoe 42 shown in the '239 patent. The second screw adjuster is of the same type as the first and is provided to allow inward and outward radial adjustment of shoe 42. The inward and outward adjustment of shoe 42 would allow the size of the duct to be varied as the solids move through the pump after passing the first shoe 40 substantially independently of the angle of the second disc 26. In further embodiments, a single stationary wall may be provided, instead of the shoes 40 and 42 and shoe walls 44 and 46.

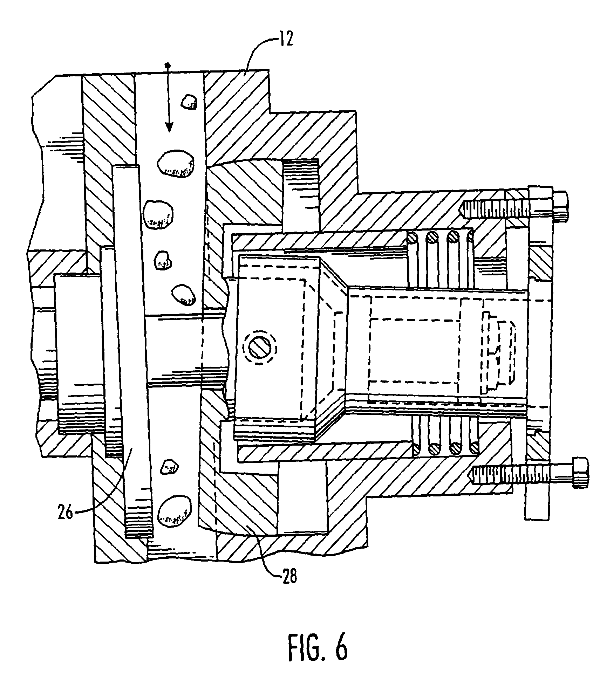

In a preferred embodiment of the present invention (not shown), compaction of articulates is accomplished by providing means for positioning rotary disc 26 at an angle relative to rotary disc 28 such that the distance between the opposing interior faces 36 and 38 adjacent the inlet 14 is greater than the distance between opposing interior faces 36 and 38 downstream from inlet 14 between inlet 14 and outlet 16. (Alternatively, the disks may be angled relative to each other to define a diverging duct from the inlet to the outlet.) In this configuration, the cross-sectional area of the transport duct decreases (or increases, in the diverging embodiment) as the distance between the opposing interior faces decreases (or increases) thereby providing a convergence or choke (or divergence) in the transport duct. Preferably, means are also included to vary the angle at which the rotary discs rotates relative to each other an embodiment of a mechanism for supporting one rotary disk at an angle relative to the other is shown Fig. 6. Variation of the angle modifies the rate of change of the cross-sectional area between the inlet and the outlet to provide a different convergence or choke (or divergence) in the duct. Various aspects of the foregoing and alternative preferred arrangements for accomplishing compaction are more fully described in U.S. Patent Application Serial No. 07/929,880 which is incorporated herein by this reference.

In another preferred embodiment of the present invention (not shown), means for vibrating particulate material adjacent inlet 14 are provided to facilitate compaction. In some applications, the use of vibrating means at inlet 14 may provide sufficient compaction for pump operation. In other applications, the pressure head developed by gravitational forces exerted on particulates at inlet 14 may provide sufficient compaction for operation of the pump in which case no additional compaction would be necessary.

As best shown in FIG. 3, the compaction of particulate material results in the formation of a transient solid or bridge composed of substantially abutting or interlocking particulates spanning the width of primary transport channel 50 and including particulates compacted within transport facilitation zones 54. The bridge of particulates is engaged by downstream facing drive surfaces 56 upon rotation of rotary discs 26 and 28 and transported towards outlet 16. In order to preclude particulates and particulate dust from wedging in the space defined between the housing 12 and the outer edge of each rotary disc 26 and 28, the rotary discs include a chamfer 72 as best shown in FIG. 5 which inclines away from housing 12 as the outer edge extends outward from the interior face of the rotary disc. Preferably, the outer edge is chamfered at an angle of about 45 degrees.

A dust drain 74 with an associated valve 76 is provided at the bottom of the housing for allowing removal of dust which may accumulate during pump operation. The valve 76 may be left open during pump operation to continually remove dust as it falls into the drain through an interior collection channel(not shown). Alternatively, the valve 76 may be left closed, and only opened when the interior collection channel has filled with dust. The opening and closing of the valve 76 will, of course, depend upon the dustiness or friability of the particular solid material being transported.

The size of the drive rotor 18 may vary widely, depending upon the type and volume of material which is to be transported or metered. Typically, outside diameters for the rotary discs 26 and 28 may range from a few inches to many feet. The smaller rotary discs are well suited for use in transporting and metering relatively small volumes of solid material such as food additives and pharmaceuticals. The larger size discs may be utilized for transporting and metering large amounts of both organic and inorganic solid materials, including food stuffs, coal, gravel and the like. The apparatus is equally well suited for transporting and metering large and small particles and mixtures of them, and large and small volumes, and may be used to transport and meter both wet and dry particulate material with the only limitation being that the material cannot be so wet that viscous forces dominate so as to disturb bridging.

The configuration of discontinuities on the opposed interior surfaces 36 and 38 may vary substantially in accordance with the present invention. In the preferred embodiment of rotary discs shown in FIGS. 4 and 5, the opposing interior faces 36 and 38 of each rotary disc include as discontinuities a plurality of evenly spaced radially extending upraised portions 82, each having a downstream facing drive surface 84 and an upstream facing surface 86 located upstream of the downstream facing drive surface 84, each of which is substantially perpendicular to the interior face of the rotary disc. The upraised portions 82 also include an inner surface 88 and an outer surface 90, both of which are contiguous with a downstream facing drive surface 84 and an upstream facing surface 86 and which are substantially perpendicular to the interior face of the rotary disc. The inner surface 88 is positioned outward of the inner diameter 92 of the rotary disc and is substantially perpendicular to the radial component which intersects therewith. The outer surface 90 is positioned inward of the outer diameter 94 of the rotary disc and is substantially perpendicular to the radial component which intersects therewith. The upraised portion 82 also includes a top surface 96 which is substantially parallel to the interior face of the rotary disc. The width of each top surface 96 expands as the top surface 96 extends from near the inner diameter 92 to near the outer diameter 94 of the rotary disc such that the width of the recess 98 defined by adjacent upraised sections 82 remains constant as the recess 98 extends from near the inner diameter 92 to near the outer diameter 94. The upraised portion 82 is backwardly curving such that the outer surface 90 extends away from outlet 16 relative to inner surface 88 as the rotary disc moves between inlet 14 and outlet 16.

Alternatively, opposing interior faces may include radially extending undulations defining a wave-like series of alternating crests and troughs. Further embodiments may employ simple ridges or grooves in the disk walls.

The apparatus in accordance with the present invention may be utilized for transporting particulate material against atmospheric pressure. In addition, the pump has been found useful in pumping solids into pressurized systems (e.g., wherein the pressure at the outlet side of the apparatus is greater than the pressure at the inlet side of the apparatus). Referring to FIGS. 1 and 2, it is preferred when pumping solids into pressurized systems that the entire cross-sectional area of outlet 16 be filled with solids during pumping. This forms a dam at the pump outlet which is a barrier to possible deleterious effects of reverse flow of gases, liquids or solids back into the pump through the outlet. The cumulative bridging of the particulates provides a sequentially formed cascaded reinforcement which adds strength to the particle bridge portions closer to the outlet, such that the bridge portions closer to the outlet will be strong enough to withstand the higher pressure at the outlet side of the apparatus. The duct length is preferably designed such that a sufficient amount of cumulative, cascaded bridging occurs in the duct to support and withstand the higher pressure at the outlet side of the pump. This can be accomplished with a convergent duct, constant cross-section duct or divergent duct system. It is interesting to note that prior to the present invention, it was not believed to be practical or possible to pump solids into a higher pressure outlet side with a divergent duct system.

Although the preferred exemplary embodiments have been shown utilizing a single drive rotor, it is also possible to provide transport apparatus having multiple drive rotors which receive material from a single or multiple inlets. The use of multiple drive rotors provides for increased material through-put without having to increase the diameter of the rotor disc.

Once the pump is set up for operation, adjustments of the shoe position should not be necessary. If jamming of the pump does occur, the right drive disc may be conveniently removed. This provides immediate access to the passageway to allow quick clean out of any blockage.

The bridging of solids results in a positive displacement of the solids. Accordingly, the pump may be used both as a transport and metering device. Due to the positive displacement of solids through the pump, metering is accomplished by measuring the rate of rotation of the drive rotor and calculating the amount of solids flow through the pump based upon the cross-sectional area of the duct at its narrowest point. When used as a metering pump, it is desirable that some type of conventional detection device be utilized to ensure that the passageway remains full of solids at all times during solids metering. Such conventional detection devices include gamma ray and electro-mechanical detectors. These detectors are all well known in the art and are neither shown in the drawings nor described in detail.

The degree to which the particulate material are compacted will vary widely depending upon the materials being conveyed, pump rotation speed and whether or not the solids are being pumped against a pressure head.

The apparatus elements are preferably made of high strength steel or other suitable material. The interior surfaces of drive discs and the interior walls of the shoes are preferably made of an abrasion-resistant metal or other suitable material having non-adhesive qualities to facilitate discharge at the outlet during operation and to facilitate cleaning during maintenance. In suitable applications, the interior surfaces of the rotary discs and the interior wall of the shoes may be composed of a material such as polytetrafluoroethylene.

The apparatus according to embodiments of the present invention is also well suited for metering slugs or plugs of solid material into a flowing pipeline system or other system where discrete repetitive introduction of material is required. The accurate control of transport and metering which is achieved allows pulsed delivery of discrete amounts of particulate material into both pressurized and unpressurized systems.

Having thus described exemplary embodiments of the present invention, it should be understood by those skilled in the art that the above disclosures are exemplary only and that various other alternatives, adaptations and modifications may be made within the scope of the present invention. For example, although a drive rotor is a preferred form of a moving surface, it is not essential. Any type of conveyor belt or other system may be utilized so long as the bridging and a downstream facing drive surface features are provided. Accordingly, the present invention is not limited to the specific embodiments as illustrated herein, but is only limited by the following claims.

## Claims

1. An apparatus for transporting particulate material comprising a transport duct having an inlet (14) and an outlet (16) downstream of said inlet, and a primary transport channel located between said inlet and said outlet, said primary transport channel being defined by a pair of opposed moving surfaces (36, 38) which move between said inlet and said outlet towards said outlet, and motive means being provided for moving said movable surfaces between said inlet and said outlet towards said outlet, **characterised in that** at least one of said moving surfaces (36, 38) has a series of discontinuities (52), each of said discontinuities is configured to define a transport facilitation zone (54) contiguous with said primary transport channel such that particulate material within said transport facilitation zone is contiguous with particulate material within said primary transport channel, and each of said discontinuities has a downstream facing drive surface (56).

2. An apparatus according to claim 1, wherein said downstream facing drive surface (56) is substantially perpendicular to said moving surface (36, 38).

3. An apparatus according to claim 1or 2, wherein each of said discontinuities (52) further comprises an upstream facing surface (60) located downstream of said downstream facing drive surface (56) and a bottom area (58) contiguous with said downstream and upstream facing surfaces, said upstream facing surface (60) inclining upwardly from said bottom area to said moving surface (36,38).

4. An apparatus according to claim 1, 2 or 3, wherein said pair of moving surfaces (36, 38) are configured to define a substantially symmetric channel within said transport duct.

5. An apparatus according any preceding claim, wherein said pair of moving surfaces (36, 38) comprises a first face (36) of a first rotary disc (26) and a second face (38) of a second rotary disc (28) and said primary transport channel is further defined by at least one arcuate wall (44, 46) extending between said inlet and said outlet.

6. An apparatus according to claim 5, wherein said first face (36) has an inner section (30) and an outer section (32) and said downstream facing drive surface (56) extends from said inner section to said outer section.

7. An apparatus according to claim 6, wherein said downstream facing drive surface (56) is arcuate and has a leading end (62) located on said inner section (30) of said first face and a trailing end (64) located on said outer section (32) of said first face, said trailing end extending away from said outlet relative to said leading end.

8. An apparatus according to claim 7, wherein the width of said transport facilitation zone (54) increases as said transport facilitation zone extends from said inner section (30) to said outer section (32).

9. An apparatus according to any preceding claim, further comprising means for positioning said second face (38) at an angle relative to said first face (36) such that, in rotation, the distance between said first and second faces adjacent said inlet is greater than the distance between said first and second faces downstream from said inlet between said inlet and said outlet.

10. An apparatus according to claim 9, further comprising means for adjusting the said angle.

11. An apparatus according to any preceding claim, further comprising means for vibrating said particulates.

12. An apparatus according to claim 11, wherein said vibrating means is positioned adjacent said inlet.

13. An apparatus according to any preceding claim, wherein said transport duct is composed of substantially non-adhesive material.

14. An apparatus according to any preceding claim, comprising a housing (12) which defines the inlet (14) and outlet (16) and encloses the transport duct.

## Patentansprüche

1. Vorrichtung für das Transportieren von Teilchenmaterial, die aufweist: einen Transportkanal mit einem Eintritt (14) und einem Austritt (16) stromabwärts vom Eintritt; und einen primären Transportkanal, der zwischen dem Eintritt und dem Austritt angeordnet ist, wobei der primäre Transportkanal durch ein Paar gegenüberliegende sich bewegende Flächen (36, 38) definiert wird, die sich zwischen dem Eintritt und dem Austritt in Richtung des Austrittes bewegen, und wobei eine Antriebseinrichtung für das Bewegen der beweglichen Flächen zwischen dem Eintritt und dem Austritt in Richtung des Austrittes vorhanden ist, **dadurch gekennzeichnet, daß** mindestens eine der sich bewegenden Flächen (36, 38) eine Reihe von Unregelmäßigkeiten (52) aufweist, wobei jede der Unregelmäßigkeiten so gestaltet ist, daß eine Transportbegünstigungszone (54) benachbart zum primären Transportkanal definiert wird, so daß das Teilchenmaterial innerhalb der Transportbegünstigungszone dem Teilchenmaterial innerhalb des primären Transportkanals benachbart ist, und wobei jede der Unregelmäßigkeiten eine stromabwärts liegende Antriebsfläche (56) aufweist.

2. Vorrichtung nach Anspruch 1, bei der die stromabwärts liegende Antriebsfläche (56) im wesentlichen senkrecht zur sich bewegenden Fläche (36, 38) verläuft.

3. Vorrichtung nach Anspruch 1 oder 2, bei der jede der Unregelmäßigkeiten (52) außerdem aufweist: eine stromaufwärts liegende Fläche (60), die stromabwärts von der stromabwärts liegenden Antriebsfläche (56) angeordnet ist; und eine Bodenfläche (58) benachbart mit der stromabwärts und der stromaufwärts liegenden Fläche, wobei die stromaufwärts liegende Fläche (60) von der Bodenfläche aus zur sich bewegenden Fläche (36, 38) nach oben geneigt ist.

4. Vorrichtung nach Anspruch 1, 2 oder 3, bei der das Paar der sich bewegenden Flächen (36, 38) so gestaltet ist, daß ein im wesentlichen symmetrischer Kanal innerhalb des Transportkanals definiert wird.

5. Vorrichtung nach einem der vorhergehenden Ansprüche, bei der das Paar der sich bewegenden Flächen (36, 38) aufweist: eine erste Fläche (36) einer ersten Rotationsscheibe (26); und eine zweite Fläche (38) einer zweiten Rotationsscheibe (28), und bei der der primäre Transportkanal außerdem durch mindestens eine bogenförmige Wand (44, 46) definiert wird, die sich zwischen dem Eintritt und dem Austritt erstreckt.

6. Vorrichtung nach Anspruch 5, bei der die erste Fläche (36) einen inneren Querschnitt (30) und einen äußeren Querschnitt (32) aufweist, und bei der sich die stromabwärts liegende Antriebsfläche (56) vom inneren Querschnitt zum äußeren Querschnitt erstreckt.

7. Vorrichtung nach Anspruch 6, bei der die stromabwärts liegende Antriebsfläche (56) bogenförmig ist und aufweist: ein vorderes Ende (62), das am inneren Querschnitt (30) der ersten Fläche angeordnet ist; und ein hinteres Ende (64), das am äußeren Querschnitt (32) der ersten Fläche angeordnet ist, wobei sich das hintere Ende weg vom Austritt relativ zum vorderen Ende erstreckt.

8. Vorrichtung nach Anspruch 7, bei der die Breite der Transportbegünstigungszone (54) zunimmt, während sich die Transportbegünstigungszone vom inneren Querschnitt (30) zum äußeren Querschnitt (32) erstreckt.

9. Vorrichtung nach einem der vorhergehenden Ansprüche, die außerdem eine Einrichtung für das Positionieren der zweiten Fläche (38) unter einem Winkel relativ zur ersten Fläche (36) aufweist, so daß bei der Drehung der Abstand zwischen der ersten und der zweiten Fläche angrenzend an den Eintritt größer ist als der Abstand zwischen der ersten und der zweiten Fläche stromabwärts vom Eintritt zwischen dem Eintritt und dem Austritt.

10. Vorrichtung nach Anspruch 9, die außerdem eine Einrichtung für das Regulieren des Winkels aufweist.

11. Vorrichtung nach einem der vorhergehenden Ansprüche, die außerdem eine Einrichtung für das Vibrieren der Teilchen aufweist.

12. Vorrichtung nach Anspruch 11, bei der die Vibrationseinrichtung angrenzend an den Eintritt positioniert ist.

13. Vorrichtung nach einem der vorhergehenden Ansprüche, bei der der Transportkanal aus im wesentlichen nichtadhäsivem Material besteht.

14. Vorrichtung nach einem der vorhergehenden Ansprüche, die ein Gehäuse (12) aufweist, das einen Eintritt (14) und einen Austritt (16) definiert und den Transportkanal einschließt.

## Revendications

1. Appareil servant à transporter un matériau particulaire comprenant un conduit de transport comportant un orifice d'admission (14) et un orifice d'évacuation (16) agencé en aval dudit orifice d'admission, et un canal de transport primaire agencé entre ledit orifice d'admission et ledit orifice d'évacuation, ledit canal de transport primaire étant défini par une paire de surfaces mobiles opposées (36, 38) se déplaçant entre ledit orifice d'admission et ledit orifice d'évacuation en direction dudit orifice d'évacuation, un moyen moteur étant destiné à déplacer lesdites surfaces mobiles entre ledit orifice d'admission et ledit orifice d'évacuation en direction dudit orifice d'évacuation, **caractérisé en ce qu'**au moins une desdites surfaces mobiles (36, 38) comporte une série de discontinuités (52), chacune desdites discontinuités étant configurée de sorte à définir une zone facilitant le transport (54), contiguë audit canal de transport primaire, de sorte que le matériau particulaire contenu dans ladite zone facilitant le transport est contigu au matériau particulaire contenu dans ledit canal de transport primaire, chacune desdites discontinuités comportant une surface d'entraînement orientée vers l'aval (56).

2. Appareil selon la revendication 1, dans lequel ladite surface d'entraînement orientée vers l'aval (56) est pratiquement perpendiculaire à ladite surface mobile (36, 38).

3. Appareil selon les revendications 1 ou 2, dans lequel chacune desdites discontinuités (52) comprend en outre une surface orientée vers l'amont (60) agencée en aval de ladite surface d'entraînement orientée vers l'aval (56) et une région inférieure (58) contiguë auxdites surfaces orientées vers l'aval et vers l'amont, ladite surface orientée vers l'amont (60) étant inclinée vers le haut à partir de ladite région inférieure, en direction de ladite surface mobile (36, 38).

4. Appareil selon les revendications 1, 2 ou 3, dans lequel ladite paire de surfaces mobiles (36, 38) est configurée de sorte à définir un canal pratiquement symétrique dans ledit conduit de transport.

5. Appareil selon l'une quelconque des revendications précédentes, dans lequel ladite paire de surfaces mobiles (36, 38) comprend une première face (36) d'un premier disque rotatif (26) et une deuxième face (38) d'un deuxième disque rotatif (28), ledit canal de transport primaire étant en outre défini par au moins une paroi arquée (44, 46) s'étendant entre ledit orifice d'admission et ledit orifice d'évacuation.

6. Appareil selon la revendication 5, dans lequel ladite première face (36) comporte une section interne (30) et une section externe (32), ladite surface d'entraînement orientée vers l'aval (56) s'étendant de ladite section interne vers ladite section externe.

7. Appareil selon la revendication 6, dans lequel ladite surface d'entraînement orientée vers l'aval (56) est arquée et comporte une extrémité avant (62) agencée sur ladite section interne (30) de ladite première face, et une extrémité arrière (64) agencée sur ladite section externe (32) de ladite première face, ladite extrémité arrière s'étendant à l'écart dudit orifice d'évacuation par rapport à ladite extrémité avant.

8. Appareil selon la revendication 7, dans lequel la largeur de ladite zone facilitant le transport (54) est accrue lors de l'extension de ladite zone facilitant le transport de ladite section interne (30) vers ladite section externe (32).

9. Appareil selon l'une quelconque des revendications précédentes, comprenant en outre un moyen pour positionner ladite deuxième face (38) à un angle par rapport à ladite première face (36), de sorte que lors de la rotation la distance entre lesdites première et deuxième faces adjacentes audit orifice d'admission est supérieure à la distance entre lesdites première et deuxième faces en aval dudit orifice d'admission entre ledit orifice d'admission et ledit orifice d'évacuation.

10. Appareil selon la revendication 9, comprenant en outre un moyen pour ajuster ledit angle.

11. Appareil selon l'une quelconque des revendications précédentes, comprenant en outre un moyen pour faire vibrer lesdites particules.

12. Appareil selon la revendication 11, dans lequel ledit moyen vibratoire est positionné près dudit orifice d'admission.

13. Appareil selon l'une quelconque des revendications précédentes, dans lequel ledit conduit de transport est composé de matériau pratiquement non adhésif.

14. Appareil selon l'une quelconque des revendications précédentes, comprenant un boîtier (12) définissant l'orifice d'admission (14) et l'orifice d'évacuation (16) et renfermant le conduit de transport.
